# EUROPÄISCHE PATENTSCHRIFT

(11) **EP 2 399 668 B1**
(45) Veröffentlichungstag und Bekanntmachung des Hinweises auf die Patenterteilung: **12.03.2014**
(21) Anmeldenummer: 10166963.8
(22) Anmeldetag: 23.06.2010
(51) Int. Cl.: B01J 19/24, F28D 9/00, B01J 19/32

(54) **Verfahren zur Umsetzung insbesondere gasförmiger Reaktionsmedien**
Method for monitoring a reaction, particularly in gaseous reaction media
Procédé de conversion, notamment de médias de réaction sous forme gazeuse

(43) Veröffentlichungstag der Anmeldung: 28.12.2011
(73) Patentinhaber: Marold, Freimut Joachim, 46282 Dorsten (DE)
(72) Erfinder: Marold, Freimut Joachim, 46282 Dorsten (DE)
(74) Vertreter: Nunnenkamp, Jörg

(56) Entgegenhaltungen:
- EP-A1- 1 621 250
- EP-A1- 1 854 534
- WO-A1-96/07467

## Beschreibung

Die Erfindung betrifft ein Verfahren zum Betrieb einer Einrichtung für die Umsetzung insbesondere gasförmiger Reaktionsmedien, wie zumindest einem Wärmetauscher in einem Behälter, wobei der Wärmetauscher mit einem Wärmetauschermedium beaufschlagt wird, und mit einer Leckageeinheit zum Erfassen etwaiger Undichtigkeiten im Innern des Behälters, wobei sich der Wärmetauscher aus zwei oder mehr Wärmetauschermodulen zusammensetzt, die jeweils einzeln und getrennt voneinander mittels der Leckageeinheit überwacht werden.

Bei einem Verfahren der eingangs beschriebenen Ausprägung entsprechend der EP 1 854 534 A1 wird so vorgegangen, dass einzelne Wärmetauschermodule mit Sammelleitungen ausgerüstet sind. Mit Hilfe der Sammelleitungen können Proben des Wärmetauschermediums dahingehend untersucht werden, ob sich hierin beispielsweise das Reaktionsmedium bzw. Bestandteile desselben finden. Auf diese Weise lassen sich Leckagen ermitteln.

Darüber hinaus wird in der DE 27 30 399 A1 ein Mantel- und Rohr-Wärmetauscher für den indirekten Wärmeübergang zwischen reaktionsfreudigen Medien beschrieben. Dabei sind Mittel zur Bildung eines rohrseitigen und eines mantelseitigen Volumens vorgesehen. Die mantel- und rohrseitigen Volumina sind durch einen Raum voneinander getrennt. Außerdem finden sich Mittel zur Feststellung einer Reaktion, die auf eine Leckage von dem rohrseitigen Volumen in das begrenzte Volumen zurückzuführen ist. Dabei wird die Leckage beispielsweise durch Messung von Druck- oder Wasserstoffkonzentrationen innerhalb des begrenzten Volumens festgestellt. Dazu können Änderungen des Druckes, der Temperatur, der Viskosität oder der elektrischen Leitfähigkeit erfasst werden.

Im Rahmen der EP 1 147 807 B1 wird ein Reaktor für die katalytische Umsetzung von Reaktionsmedien beschrieben, welcher durch eine Modulbauweise unter Bildung von Einzelreaktoren im zugehörigen Reaktorbehälter gekennzeichnet ist. Eine solche Modulbauweise hat sich in diesem Zusammenhang in der chemischen Industrie als günstig erwiesen, weil grundsätzlich die Möglichkeit besteht, einzelne Module bei einem Defekt austauschen zu können.

Dabei wird im Rahmen der EP 1 221 339 A1 bereits die Möglichkeit angesprochen, einzelne Wärmetauschermodule mit vorgegebener Querschnittsausdehnung durch ein sogenanntes Mannloch aus dem zugehörigen Behälter entfernen zu können. Allerdings besteht nach wie vor das Problem, dass Leckagen bisher nur aufwändig und nicht zielgenau ermittelt werden können bzw. lediglich dann erfasst werden, wenn reaktionsfreudige Medien eine Mischung im Sinne der DE 27 30 399 A1 erfahren. Hier will die Erfindung insgesamt Abhilfe schaffen.

Der Erfindung liegen das technische Problem zu Grunde, ein derartiges Verfahren zum Betrieb einer Einrichtung für die Umsetzung insbesondere gasförmiger Reaktionsmedien so weiterzuentwickeln, dass etwaige Undichtigkeiten und Fehlfunktionen im Innern des Behälters unmittelbar und unschwer erfasst werden und dadurch ein modularer bzw. getrennter Austausch einzelner Wärmetauschermodule zielgenau erst ermöglicht wird.

Zur Lösung dieser technischen Problemstellung ist ein gattungsgemäßes Verfahren zum Betrieb einer Einrichtung für die Umsetzung insbesondere gasförmiger Reaktionsmedien im Rahmen der Erfindung dadurch gekennzeichnet, dass dem Reaktionsmedium und/oder dem Wärmetauschermedium wenigstens ein Indikatormedium zugeführt und mittels zumindest eines auf das Indikatormedium ansprechenden Leckagesensors das jeweils komplementäre Medium auf Indikatorspuren untersucht wird.

Die erfindungsgemäße Einrichtung kommt sowohl bei der Durchführung von chemischen Reaktionen als auch bei Verdampfungs- und Kondensationsprozessen in Wärmetauschern zum Einsatz. Der Begriff Reaktionsmedium erfasst also erfindungsgemäß jedes Medium, welches im Inneren des fraglichen Behälters eine chemische Veränderung und/oder eine Phasenumwandlung erfährt. Im erstgenannten Fall wird etwaige entstehende Reaktionswärme über das Wärmetauschermedium abgeführt, welches in diesem Fall als Kühlmedium ausgelegt ist. Grundsätzlich kann es sich bei dem Wärmetauschermedium aber auch um ein Heizmedium handeln. Dann wird für die gewünschte chemische Reaktion Reaktionswärme zugeführt. Die letztgenannte Variante nutzt dagegen den Wärmetauscher zur Phasenumwandlung, beispielsweise zur Kondensation eines Gases oder Dampfes.

In jedem Fall wird das Wärmetauschermedium durch die einzelnen Wärmetauschermodule geführt, und zwar beispielsweise durch Rohrschlangen, Rohrbündel oder zwischen sogenannte Thermobleche hindurchgeleitet. Tatsächlich setzen sich die erfindungsgemäßen Wärmetauschermodule im Regelfall aus Thermoblechen zusammen bzw. sind als Thermoblechmodule ausgelegt. Die einzelnen Thermobleche sind im Wesentlichen als gradflächige punktgeschweißte Bleche mit kissenartigen Ausformungen und elliptischen Strömungskanälen ausgebildet. Durch die elliptischen Strömungskanäle fließt in der Regel das Wärmetauschermedium, wobei an dieser Stelle die Strömung behindernde Umlenkungen nicht beobachtet werden. Zwischen diesen einzelnen Thermoblechen wird das Reaktionsmedium geführt, bei welchem es sich nicht notwendigerweise um ein reagierendes Gas handeln muss, sondern dieses auch einen zu kondensierenden Dampf darstellen kann.

Für den Fall, dass in dem Behälter eine chemische Reaktion stattfindet, stellt die gesamte Einrichtung einen Reaktor dar. Der Wärmetauscher dient wie beschrieben dazu, die Reaktionswärme ab- oder zuzuführen. Kommt es dagegen im Inneren des Behälters zu Verdampfungs- und Kondensationsprozessen des Reaktionsmediums, so handelt es sich bei der Einrichtung um einen Kondensator, beispielsweise einen Kopfkondensator. Beide grundsätzlichen Varianten werden abgedeckt.

Neben der bereits beschriebenen Möglichkeit, jedes einzelne Wärmetauschermodul einzeln und getrennt voneinander mit Hilfe der Leckageeinheit zu überwachen, besteht darüber hinaus die Möglichkeit, dass jedes Wärmetauschermodul mit ein oder mehreren separaten Prozesssensoren ausgerüstet ist. Üblicherweise verfügt die Leckageeinheit über wenigstens einen Leckagesensor. Zu diesem Leckagesensor treten dann noch ein oder mehrere Prozesssensoren hinzu.

Bei diesen Prozesssensoren mag es sich um Temperaturfühler, Druckmessgeräte, Niveaumessgeräte, Durchflussmessgeräte, Analysemessgeräte etc. handeln. In Verbindung mit dem zugehörigen Leckagesensor der Leckageeinheit kann das jeweilige Wärmetauschermodul im Inneren des Behälters umfassend überwacht werden.

Dabei ist die Auslegung im Regelfall so getroffen, dass die einzelnen Wärmetauschermodule redundant ausgelegt sind, das heißt funktional gleich bzw. vergleichbar. Auf diese Weise kann ein störungsfrei arbeitendes Wärmetauschermodul die Funktion eines anderen mit Störungen behafteten Wärmetauschermoduls übernehmen. Das gelingt, ohne dass das mit Störungen behaftete Wärmetauschermodul unmittelbar ausgetauscht werden muss. Allerdings ist ein solcher Austausch im Rahmen der Erfindung problemlos möglich, weil der Behälter vorteilhafterweise mit einer verschließbaren und an das jeweilige Wärmetauschermodul angepassten Öffnung ausgerüstet ist. Das bedeutet konkret, dass ein Ein- und Ausbauquerschnitt des Wärmetauschermoduls kleiner als der Öffnungsquerschnitt ausgelegt ist. Bei dieser Öffnung mag es sich um ein Mannloch handeln. Da die einzelnen Wärmetauschermodule im Regelfall gleich von ihrer Auslegung und Größe her ausgebildet sind, gelingt der Austausch problemlos. Hierzu trägt auch der jeweils beschriebene redundante Charakter der einzelnen Wärmetauschermodule bei.

Im Rahmen der Leckageüberwachung kann auf unterschiedliche Art und Weise vorgegangen werden. So propagiert die Erfindung eine Variante, bei welcher dem Reaktionsmedium und/oder dem Kühlmedium wenigstens ein Indikatormedium zugeführt wird. Das geschieht meistens eingangsseitig. Grundsätzlich kann auch mit verschiedenen Indikatormedien gearbeitet werden, einerseits einem solchen für das Reaktionsmedium und andererseits einem anderen für das Kühlmedium. Um nun das Indikatormedium zu erfassen, wird ausgangsseitig das jeweils komplementäre Medium auf Indikatorspuren untersucht. Das geschieht in der Regel unter Rückgriff auf wenigstens einen auf das Indikatormedium ansprechenden Leckagesensor.

Anders ausgedrückt, wird beispielsweise das Reaktionsmedium dahingehend untersucht, ob sich hierin das Indikatormedium findet, welches dem Kühlmedium zugeführt worden ist. Selbstverständlich kann auch umgekehrt vorgegangen werden.

So ist es möglich, dass das eigentlich im Inneren des Behälters umgesetzte (gasförmige) Reaktionsmedium auf etwaige Spuren des Wärmetauschermediums hin untersucht wird. Zu diesem Zweck erfährt das Reaktionsmedium eine Prüfung mit Hilfe eines Leckagesensors, welcher auf das Wärmetauschermedium anspricht. So wird üblicherweise für den Fall vorgegangen, dass beispielsweise das einzelne Wärmetauschermodul als Prozessdampferzeuger zur Anwendung kommt. In diesem Fall wird ein Produktstrom des Reaktionsmediums unter Dampferzeugung gekühlt. Dabei ist der Druck eingangsseitig meistens höher als ausgangsseitig. Folgerichtig kann ausgangsseitig mit dem bereits angesprochenen Leckagesensor gearbeitet werden, welcher bei diesem Vorgang in das Reaktionsmedium bzw. den erzeugten Dampf durch eine Leckage austretendes Wärmeträgermedium erfasst.

Daneben ist auch eine umgekehrte Vorgehensweise denkbar. In diesem Fall wird das Wärmetauschermedium auf etwaige Spuren des Reaktionsmediums hin untersucht. Das geschieht mit Hilfe eines auf das Reaktionsmedium ansprechenden Leckagesensors, welcher für die Prüfung und Untersuchung des Wärmetauschermediums herangezogen wird. Das heißt, das Wärmetauschermedium wird auf etwaige Spuren des Reaktionsmediums hin untersucht. Eine solche Konstellation ist im allgemeinen dann gegeben, wenn das Reaktionsmedium unter einem Überdruck steht und folglich in etwaige Leckagen im Wärmetauschermediumkreislauf eindringen kann. Mit Hilfe eines oder mehrerer auf das Reaktionsmedium ansprechender Leckagesensoren beispielsweise im Abfluss des Wärmetauschermediums kann dann eine Undichtigkeit erfasst werden.

Um die ermittelte Undichtigkeit genauestens zu lokalisieren, ist das jeweilige Wärmetauschermodul mit jeweils einem eigenen zugehörigen Leckagesensor ausgestattet. Dadurch lässt sich eine etwaige Undichtigkeit eindeutig dem zugehörigen und überwachten Wärmetauschermodul zuordnen. Alternativ oder zusätzlich ist es aber auch möglich, dass wenigstens ein Leckagesensor für sämtliche Wärmetauschermodule vorgesehen ist. In diesem Fall muss sichergestellt werden, dass das jeweils zu untersuchende Kühlmedium und/oder Reaktionsmedium jedes einzelnen Wärmetauschermoduls dem Leckagesensor getrennt zugeführt wird. Das kann beispielsweise seriell, das heißt nach und nach, beispielsweise entsprechend einem vorgegebenen Muster, erfolgen.

In diesem Zusammenhang ist es erforderlich, dass die einzelnen Wärmetauschermodule hinsichtlich des zu untersuchenden Kühlmediums und/oder Reaktionsmediums voneinander separiert sind. Soll beispielsweise das Reaktionsmedium auf Spuren des Kühlmediums untersucht werden, so empfiehlt es sich, jedes einzelne Wärmetauschermodul mit beispielsweise einem getrennten Restgassammler auszurüsten. Dadurch werden die einzelnen durch das jeweilige Wärmetauschermodul hindurch geführten Reaktionsmedien voneinander separiert und in dem Restgassammler aufgefangen. Dabei kann jeder Restgassammler mit einem eigenen Ventil oder einer Absperrung ausgerüstet werden, um dann das zu untersuchende Reaktionsmedium des ausgewählten Wärmetauschermoduls einer gemeinsamen Restgasleitung mit dem darin befindlichen Leckagesensor zuzuführen.

In vergleichbarer Weise sind die einzelnen Kreisläufe für das Wärmeträgermedium der jeweiligen Wärmetauschermodule voneinander zu trennen. Auch in diesem Fall kann man die jeweils voneinander getrennten Kreisläufe des Wärmetauschermediums mit einem Absperrorgan ausrüsten und dann in einer gemeinsamen Leitung zusammenfassen, die mit dem (einzigen) Leckagesensor ausgerüstet ist, welcher auf das Reaktionsmedium reagiert.

Bei dem Indikatormedium kann es sich um ein gasförmiges Medium, eine Flüssigkeit oder auch einen Feststoff (beispielsweise in pulveriger Form) handeln. Im Regelfall kommt als Indikatormedium ein solches zum Einsatz, welches als inertes Medium ausgebildet ist, jedenfalls nicht mit dem Reaktionsmedium respektive dem Wärmetauschermedium reagiert. An dieser Stelle hat sich ein Inertgas wie beispielsweise ein Edelgas als besonders vorteilhaft erwiesen. Im Regelfall greift man auf Helium zurück, weil dieses Edelgas besonders klein aufgebaute Moleküle aufweist und folglich für das Auffinden von Lecks besonders geeignet ist. Grundsätzlich kann aber auch mit radioaktiven Substanzen gearbeitet werden.

Daneben ist es grundsätzlich möglich, das jeweilige Wärmetauschermodul mit einer Probeentnahmerinne mit zugehörigem Leckagesensor auszurüsten. Dann wird meistens das von dem Wärmetauschermodul erzeugte und abgegebene bzw. herunterlaufende Kondensat des Reaktionsmediums untersucht. Selbstverständlich kann mit Hilfe der Probeentnahmerinne auch eine Untersuchung des Wärmetauschermediums erfolgen. In jedem Fall lässt sich das Kondensat hinsichtlich etwaiger Bestandteile des Wärmetauschermediums und/oder eines Indikatormediums untersuchen. Vergleichbares gilt für das Reaktionsmedium, wenn dem Wärmeträgermedium beispielsweise ein Indikatormedium, Edelgas im Beispielfall, zugeführt wird.

In diesem Zusammenhang hat es sich als günstig erwiesen, wenn das Indikatormedium in vorgegebener Menge dem Wärmeträgermedium und/oder dem Reaktionsmedium eingangsseitig des zu untersuchenden Wärmetauschermoduls zugeführt wird. Diese eingangsseitig zugeführte Menge an Indikatormedium kann ausgangsseitig ebenfalls gemessen werden, und zwar erneut im Wärmeträgermedium und/oder Reaktionsmedium. Aus einer etwaigen Differenz zwischen der eingangsseitigen Menge und der ausgangsseitigen Menge des Indikatormediums lässt sich auf Leckagen im Kreislauf rückschließen. Wenn beispielsweise die Menge an Indikatormedium bekannt ist, welche dem Kühlmedium eingangsseitig zugeführt wird, so kann die fragliche Menge an dem Indikatormedium ebenfalls ausgangsseitig des Kühlmediums erfasst werden. Stimmen die beiden Mengen innerhalb festgelegter Fehlertoleranzen überein, weist das Wärmeträgermedium kein Leck auf. Ähnlich kann mit dem Reaktionsmedium gearbeitet werden.

Diese sämtlichen Vorgaben und Auswertungen werden im Allgemeinen durch eine Steueranlage vorgenommen. Mit Hilfe dieser Steueranlage kann beispielsweise das eine oder die mehreren Dosierventile angesteuert und beaufschlagt werden. Darüber hinaus ist die Steueranlage in der Lage, den wenigstens einen Leckagesensor auszulesen und dessen Messwerte auszuwerten. Außerdem kann mit Hilfe der Steueranlage die Menge an zugeführtem Indikatormedium vorgegeben werden. Ebenfalls ist die Steueranlage in der Lage, eine etwaige Mengendifferenz zwischen dem zugeführten Indikatormedium und dem ausgangsseitig gemessenen Indikatormedium festzustellen und hieraus auf Leckagen rückzuschließen.

Wie bereits erläutert, sind die Wärmetauschermodule gleich oder vergleichbar aufgebaut und von ihrer Funktionsweise redundant ausgelegt. Das eröffnet den Vorteil, dass das jeweilige Wärmetauschermodul problemlos aus dem zugehörigen Behälter entfernt und durch ein gleich aufgebautes Wärmetauschermodul ersetzt werden kann. Diese Vorgehensweise ist möglich, weil der Behälter mit der verschließbaren und an das jeweilige Wärmetauschermodul bzw. dessen Einbauquerschnitt (Ausbauquerschnitt) angepassten Öffnung ausgerüstet ist. Hierbei handelt es sich im Regelfall um ein entsprechend gestaltetes Mannloch. Auf diese Weise können kostspielige Apparateflansche ver mieden werden, die sonst für Reparatur- oder Inspektionszwecke obligatorisch sind.

Die erzielte Redundanz führt zur gesteigerten Sicherheit einer entsprechend aufgebauten Einrichtung. Weil ein ausgefallenes Wärmetauschermodul unmittelbar durch ein anderes ersetzt werden kann. Auch lässt sich eine solche Einrichtung besonders einfach handhaben und aufrüsten bzw. reparieren, weil die einzelnen Wärmetauschermodule leicht zu montieren und demontieren sind. Dadurch werden insgesamt Kostenvorteile beobachtet.

Hinzu kommt, dass jedes einzelne Wärmetauschermodul praktisch autark arbeitet und entsprechend überwacht werden kann. Hierzu schlägt die Erfindung nicht nur die Leckageeinheit vor, welche die einzelnen Wärmetauschermodule jeweils einzeln und getrennt voneinander überwacht. Sondern jedes Wärmetauschermodul ist üblicherweise mit einem oder mehreren separaten Prozesssensoren ausgerüstet. Dadurch kann jedes Wärmetauschermodul einer individuellen Temperaturmessung unterzogen werden. Das gilt sowohl für einen Eingang als auch für einen Ausgang. Außerdem kann ein Prozesssensor für eine Druckmessung respektive eine Differenzdruckmessung realisiert werden. Auch andere Prozessparameter lassen sich sensorisch erfassen, um den autarken und redundanten Betrieb der einzelnen Wärmetauschermodule zu ermöglichen.

Im Ergebnis wird eine Einrichtung für die Umsetzung insbesondere gasförmiger Reaktionsmedien zur Verfügung gestellt, die sich sowohl als Reaktor für die Durchführung von chemischen Reaktionen als auch als Kondensator für die Durchführung von Verdampfungs- und Kondensationsprozessen einsetzen lässt. In beiden prinzipiellen Fällen gelingt eine zielgenaue und schnelle Überwachung der einzelnen im Inneren des Behälters vorgesehenen Wärme tauschermodule. Etwaige Leckagen werden also unmittelbar und treffsicher erfasst, sodass - vor dem Auftreten größerer Schäden - unverzüglich Gegenmaßnahmen ergriffen werden können. Diese lassen sich besonders einfach durchführen, weil die einzelnen Wärmetauschermodule vorteilhaft redundant aufgebaut sind und darüber hinaus die Möglichkeit besteht, diese durch eine entsprechend angepasste Öffnung im Behälter unschwer auszutauschen.

Im Detail lassen sich sowohl das umzusetzende gasförmige Reaktionsmedium als auch das Wärmetauschermedium dahingehend untersuchen, ob hierin Spuren des jeweils komplementären Mediums vorhanden sind oder nicht. Alternativ ist auch der Zusatz eines Indikatormediums oder mehrerer Indikatormedien denkbar. Sofern an dieser Stelle Helium als Indikatormedium eingesetzt wird, lassen sich Spuren von Helium unschwer nachweisen, beispielsweise mit Hilfe eines Massenspektrometers. Alternativ oder zusätzlich ist auch der Einsatz von Spuren radioaktiver Substanzen denkbar und möglich.

Dabei kann das jeweilige Indikatormedium kontinuierlich oder stoßweise bzw. diskontinuierlich dem zu prüfenden Reaktionsmedium respektive Wärmetauschermedium zugeführt werden. Jeweils ausgangsseitig lässt sich dann das Reaktionsmedium bzw. Wärmetauschermedium dahingehend untersuchen, ob hierin Spuren des Indikatormediums vorhanden sind, die evtl. auf eine Leckage hindeuten. Auch kann durch diesen stoßweisen Betrieb bzw. Zusatz des Indikatormediums der Weg und die Geschwindigkeit des solchermaßen markierten Mediums verfolgt werden. - Gegenstand der Erfindung ist auch ein Verfahren zur Umsetzung eines insbesondere gasförmigen Reaktionsmediums, wie es im Anspruch 15 beschrieben wird.

Im Folgenden wird die Erfindung anhand einer lediglich ein Ausführungsbeispiel darstellenden Zeichnung näher erläutert; es zeigen:
- Figur 1: eine erfindungsgemäße Einrichtung für die Umsetzung insbesondere gasförmiger Reaktionsmedien in einem Längsschnitt,
- Figur 2: den Gegenstand nach Figur 1 in einer anderen Ansicht,
- Figur 3: ein einzelnes Wärmetauschermodul perspektivisch und
- Figuren 4 und 5: das Wärmetauschermodul nach Figur 3 in verschiedenen Ausgestaltungen.

In den Figuren ist eine Einrichtung für die Umsetzung insbesondere gasförmiger Reaktionsmedien dargestellt. Vorliegend handelt es sich bei der Einrichtung um einen Kondensator, beispielsweise einen Kopfkondensator. In diesem Kondensator wird ein gasförmiges Reaktionsmedium, vorliegend ein Dampf eines Prozessgases, kondensiert. Das ist selbstverständlich nur beispielhaft und nicht einschränkend zu verstehen.

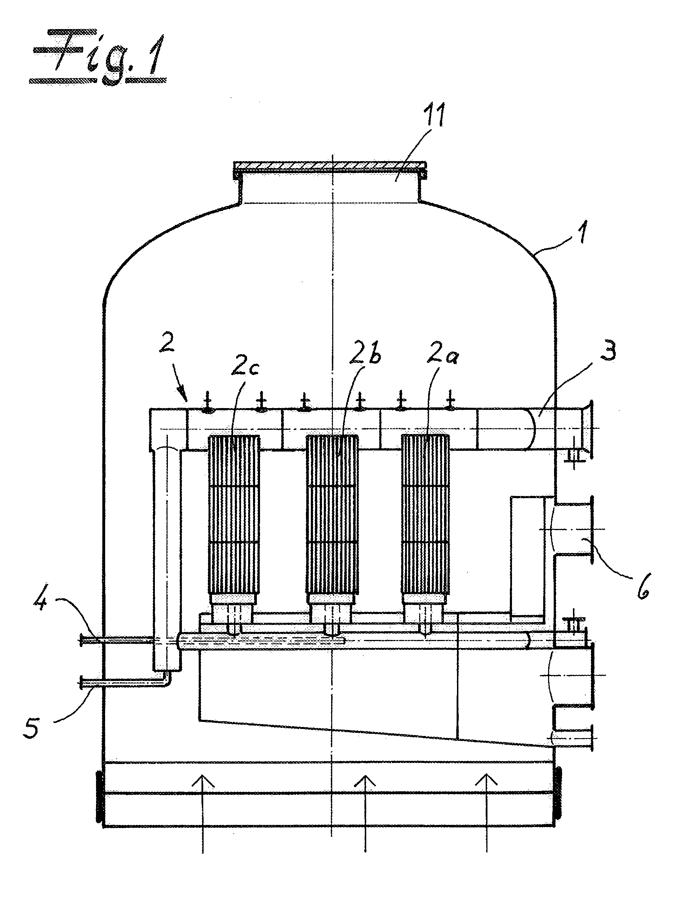

Um die gewünschte Kondensation des dampfförmigen Prozessgases zu erreichen, welches fußseitig in einen Behälter 1 zugeführt wird (vergleiche die Pfeile in Figur 1), ist im Inneren des Behälters 1 ein Wärmetauscher 2 vorgesehen.

Der Wärmetauscher 2 setzt sich aus einzelnen Wärmetauschermodulen 2a, 2b, 2c zusammen.

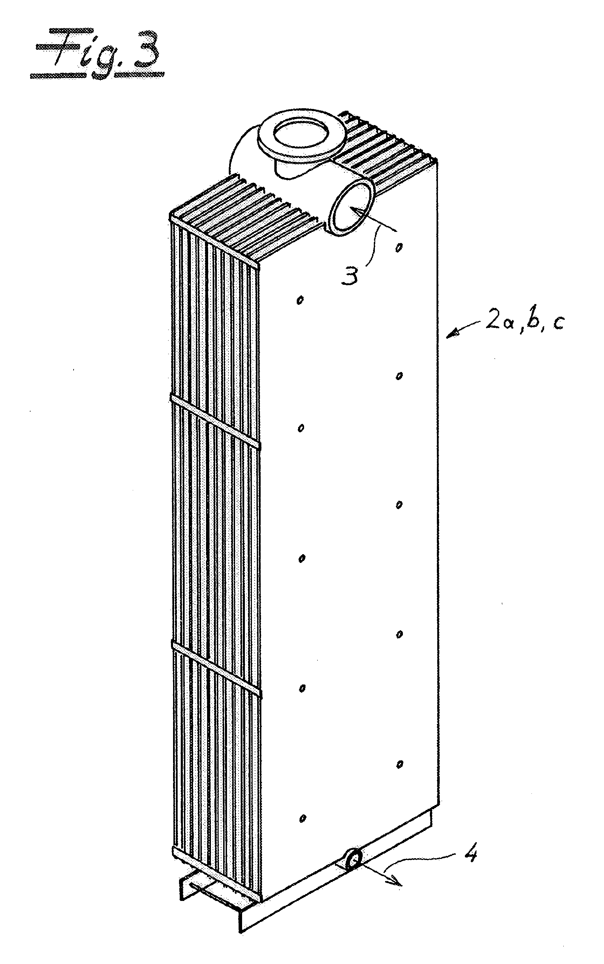

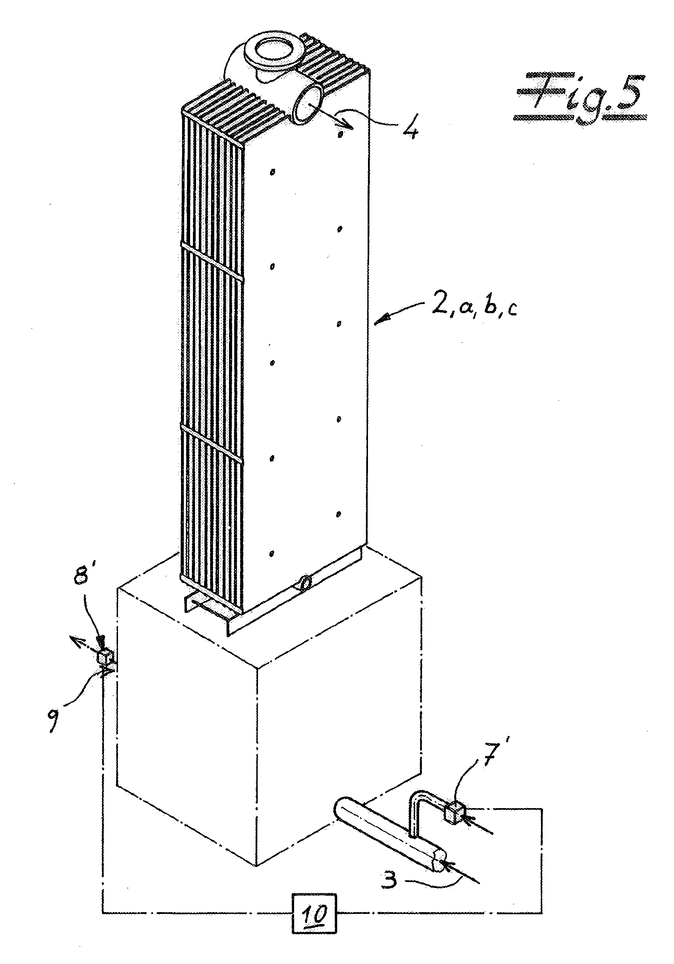

Die einzelnen Wärmetauschermodule 2a, 2b, 2c sind jeweils paarweise benachbart zueinander angeordnet und werden über einen gemeinsamen Zulauf 3 mit einem Wärmetauschermedium beaufschlagt. Bei dem Wärme tauschermedium handelt es sich vorliegend und nicht einschränkend um Wasser. Nachdem das Wärmetauschermedium die einzelnen Wärmetauschermodule 2a, 2b, 2c passiert hat, verlässt das Wärmetauschermedium das Gehäuse 1 über einen Ablauf 4. Darüber hinaus erkennt man noch einen Ablauf 5 für das im Kondensator erzeugte Kondensat des dampfförmigen Prozessgases. Außerdem ist ein Abzug 6 für Restgas realisiert. Diese sämtlichen Elemente sind nur beispielhaft zu verstehen, wobei die Lage von Einlauf 3 und Auslauf 4 für das Wärmeträgermedium im Rahmen der Variante nach der Figur 5 topologisch umgekehrt gestaltet ist im Vergleich zu der Variante nach den Figuren 1 bis 4.

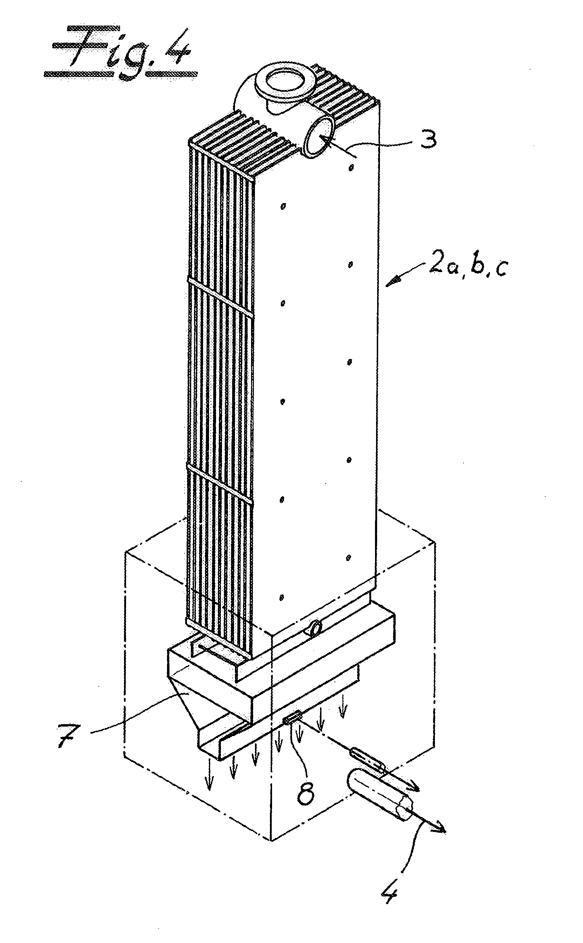

Wesentlich für die beschriebene Einrichtung bzw. den dargestellten Kondensator ist eine Leckageeinheit 7, 8, welche in verschiedenen Varianten besonders in den Figuren 4 und 5 zu erkennen ist. Mit Hilfe der Leckageeinheit 7, 8 lassen sich etwaige Undichtigkeiten im Inneren des Behälters 2 erfassen. Bei diesen Undichtigkeiten handelt es sich im Beispielfall und nicht einschränkend um Leckagen des jeweiligen Wärmetauschermoduls 2a, 2b, 2c.

Tatsächlich ist das jeweils schematisch dargestellte Wärmetauschermodul 2a, 2b, 2c als Thermoblechmodul 2a, 2b, 2c ausgeführt und mag im Detail so ausgelegt sein und arbeiten, wie dies in der WO 2009/095221 A1 des Anmelders beschrieben wird. Danach wird das Wärmeträgermedium bzw. Wasser durch zwischen Thermobleche gebildete elliptische Strömungskanäle hindurchgeführt.

Zwischen den einzelnen Thermoblechen sind Freiräume realisiert, durch welche das dampfförmige Prozessgas hindurchströmt und an den Thermoblechen kondensiert. Das ist selbstverständlich nur beispielhaft zu verstehen, wobei die einzelnen Wärmetauschermodule 2a, 2b, 2c grundsätzlich auch anders aufgebaut sein können.

Entscheidend ist, dass die einzelnen Wärmetauschermodule 2a, 2b, 2c einzeln und getrennt voneinander mit Hilfe der Leckageeinheit 7, 8 überwacht werden. Im Rahmen des Ausführungsbeispiels geht es primär darum, einen Austritt des Wärmetauschermediums (Wasser) aus dem Wärmetauscher 2 bzw. dem jeweils überwachten Wärmetauschermodul 2a, 2b, 2c in das dampfförmige Prozessgas zu detektieren. Das kann im Rahmen des Ausführungsbeispiels auf prinzipiell zweierlei Art und Weise geschehen.

Tatsächlich ist im Rahmen der Variante nach Figur 4 das jeweilige Wärmetauschermodul 2a, 2b, 2c mit einer Probeentnahmerinne 7 mit Leckagesensor 8 ausgerüstet, um Kondensat des Reaktionsmediums bzw. des dampfförmigen Prozessmediums im Beispielfall untersuchen zu können. Das heißt, die Leckageeinheit 7, 8 setzt sich im Beispielfall nach der Figur 4 aus der Probeentnahmerinne 7 und dem in der Probeentnahmerinne 7 angeordneten Leckagesensor 8 zusammen. Auf diese Weise kann von dem jeweiligen Wärmetauschermodul 2a, 2b, 2c erzeugtes Kondensat unmittelbar auf Spuren von beispielsweise Wasser als Wärmetauschermedium untersucht werden. Das heißt, das Reaktionsmedium bzw. das dampfförmige Prozessgas im Beispielfall wird mit Hilfe des auf das Wärmetauschermedium (Wasser) ansprechenden Leckagesensors 8 untersucht. Grundsätzlich kann natürlich auch umgekehrt das Wärmetauschermedium (Wasser) mit Hilfe eines auf das gasförmige Reaktionsmedium (dampfförmiges Prozessgas) ansprechenden Leckagesensors 8 untersucht werden. Das ist jedoch nicht dargestellt.

Im Rahmen der Vorgehensweise nach Figur 4 ist jedem einzelnen Wärmetauschermodul 2a, 2b, 2c eine eigene Probeentnahmerinne 7 mit zugehörigem eigenen Leckagesensor 8 zugeordnet. Grundsätzlich kann aber auch so vorgegangen werden, dass jedes Wärmetauschermodul 2a, 2b, 2c zwar mit einer eigenen Probeentnahmerinne 7 ausgerüstet ist, allerdings sämtliche Probeentnahmerinnen 7 in einer gemeinsamen Rinne zusammengefasst werden, die wiederum den Leckagesensor 8 aufweist. Dabei mag jede Probeentnahmerinne 7 des zugehörigen Wärmetauschermoduls 2a, 2b, 2c beispielsweise mit einem Absperrorgan ausgerüstet werden, sodass der Leckagesensor 8 seriell, das heißt in einer bestimmten Reihenfolge, beaufschlagt wird. Das heißt, das zu untersuchende Kondensat bzw. das kondensierte gasförmige Prozessgas wird dem fraglichen Leckagesensor 8 getrennt zugeführt, und zwar separat für jedes einzelne Wärmetauschermodul 2a, 2b, 2c. Das kann in einer bestimmten Reihenfolge geschehen, indem beispielsweise die angesprochenen und nicht dargestellten Absperrorgane von einer Steueranlage 10 entsprechend beaufschlagt und dann der Leckagesensor 8 ausgelesen wird.

Im Rahmen der alternativen Vorgehensweise nach Figur 5 wird dem Wärmeträgermedium ein Indikatormedium zugeführt. Das geschieht eingansseitig des jeweils zu untersuchenden Wärmetauschermoduls 2a, 2b, 2c, nämlich im Bereich seines Einlaufes 3. Nach Durchlaufen des betreffenden Wärmetauschermoduls 2a, 2b, 2c wird das Wärmeträgermedium untersucht. Dazu findet eine Probeentnahme statt. Tatsächlich mag in den Kreislauf des Wärmeträgermediums der Leckagesensor 8 eingeschleift werden, wie dies grundsätzlich die Figur 5 andeutet. Anstelle der Probeentnahmerinne 7 im Rahmen der Variante nach Figur 4 als Bestandteil der Leckageeinheit 7, 8 ist an dieser Stelle ein Dosierventil 7' in Kombination mit dem Leckagesensor 8' realisiert. Dabei findet sich der Leckagesensor 8' im Bereich einer Entnahmeöffnung 9 des Wärmetauschermediums an dem besagten und zu untersuchenden Wärmetauschermoduls 2a, 2b, 2c.

Mit Hilfe des Dosierventils 7' wird dem Wärmetauschermedium das bereits angesprochene Indikatormedium in einer vorgegebenen Menge zugeführt. Das geschieht eingangsseitig des zugehörigen Wärmetauschermoduls 2a, 2b, 2c. Bei dem Indikatormedium handelt es sich im Ausführungsbeispiel und nicht einschränkend um Helium. Dabei mag die Zufuhr mit Hilfe des Dosierventils 7' kontinuierlich oder stoßweise erfolgen. Jedenfalls sorgt die Steueranlage 10 für eine entsprechende Ansteuerung des Dosierventils 7'. Außerdem ist der Leckagesensor 8' an die Steueranlage 10 angeschlossen. Je nachdem, wie groß die Menge an gemessenem Indikatormedium an der Entnahmeöffnung 9 des Wärmetauschermediums bemessen ist, kann auf eine eventuelle Leckage des Wärmetauschermediums rückgeschlossen werden. Die Entnahmeöffnung 9 findet sich ausgangsseitig des auf diese Weise überprüften Wärmetauschermoduls 2a, 2b, 2c.

Grundsätzlich kann die Entnahmeöffnung 9 auch am Gasausgang des zu kondensierenden Prozessgases vorgesehen werden. Dann wird nicht das Wärmetauschermedium als solches hinsichtlich der transportierten Menge an Indikatormedium untersucht, sondern vielmehr der Übertritt des Indikatormediums von dem Wärmeträgermedium in das Reaktionsmedium bzw. das zu kondensierende Prozessgas.

So oder so lässt sich aus einer Differenz zwischen der eingangsseitigen Menge des Indikatormediums und dessen ausgangsseitiger Menge auf eine Leckage rückschließen, und zwar im Rahmen des dargestellten Beispiels im Kreislauf des Wärmeträgermediums. Denn mit Hilfe des Dosierventils 7' lässt sich eingangsseitig die Menge an Indikatormedium vorgeben und ausgangsseitig die Menge an Indikatormedium mit Hilfe des Leckagesensors 8' erfassen. Entsprechende Differenzen werden durch die Steueranlage 10 gemessen und ausgewertet.

Dem Wärmetauschermodul 2a, 2b, 2c kann nicht nur der bereits beschriebene Leckagesensor 8 bzw. 8' zugeordnet werden. Meistens ist jedes Wärmetauschermodul 2a, 2b, 2c darüber hinaus mit einem oder mehreren separaten Prozesssensoren ausgerüstet, welche von der Steueranlage 10 ausgelesen und verarbeitet werden. Das deuten strichpunktierte Verbindungslinien zu den einzelnen Wärmetauschermodulen 2a, 2b, 2c an. Bei diesen Prozesssensoren mag es sich um solche zur Messung der Temperatur im Einlauf 3 für das Wärmeträgermedium und/oder im Auslauf 4 für das Wärmeträgermedium handeln. Außerdem können Druck- und Differenzdruckmessungen vorgenommen werden. Auf diese Weise sind die einzelnen Wärmetauschermodule 2a, 2b, 2c im Wesentlichen gleich und redundant aufgebaut. Dabei sind der eine oder die mehreren Prozesssensoren ergänzend an die Steueranlage 10 angeschlossen.

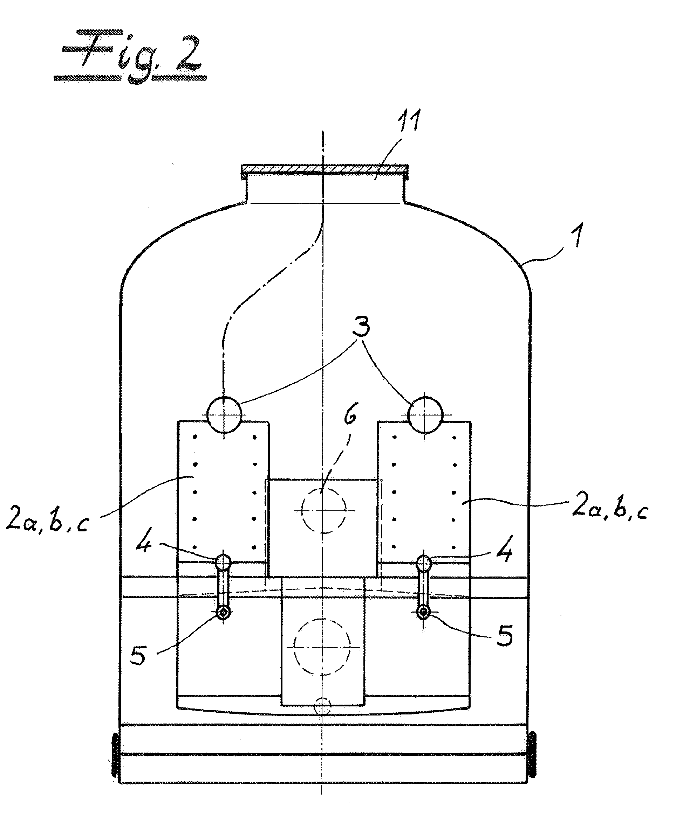

Dadurch ist die Steueranlage 10 in der Lage, etwaige Störungen oder Leckagen des jeweiligen Wärmetauschermoduls 2a, 2b, 2c zielgenau anzuzeigen. Das einzelne Wärmetauschermodul 2a, 2b, 2c lässt sich im Falle einer Fehlfunktion unschwer aus dem Gehäuse 1 entfernen. Hierzu steht eine Öffnung 11 kopfseitig des Gehäuses 1 zur Verfügung, die sich verschließen lässt. Die Öffnung 11 ist dabei so ausgelegt, dass sie an den Querschnitt (Ein- und Ausbauquerschnitt) des jeweils auszutauschenden Wärmetauschermoduls 2a, 2b, 2c angepasst ist. Tatsächlich kann das fragliche Wärmetauschermodul 2a, 2b, 2c entlang des in Figur 2 angedeuteten S-förmigen Weges durch die fragliche Öffnung 11 herausbefördert und ausgetauscht werden. Zu diesem Zweck mag in diesem Bereich eine entsprechende S-förmige Schienenführung für das jeweils auszutauschende Wärmetauschermodul 2a, 2b, 2c realisiert werden.

## Patentansprüche

1. Verfahren zum Betrieb einer Einrichtung für die Umsetzung insbesondere gasförmiger Reaktionsmedien, mit zumindest einem Wärmetauscher (2) in einem Behälter (1), wobei der Wärmetauscher (2) mit einem Wärmetauschermedium beaufschlagt wird, und mit einer Leckageeinheit (7, 8; 7', 8') zum Erfassen etwaiger Undichtigkeiten im Innern des Behälters (2), wobei sich der Wärmetauscher (2) aus zwei oder mehr Wärmetauschermodulen (2a, 2b, 2c) zusammensetzt, die jeweils einzeln und getrennt voneinander mittels der Leckageeinheit (7, 8; 7', 8') überwacht werden,
**dadurch gekennzeichnet, dass**
dem Reaktionsmedium und/oder dem Wärmetauschermedium wenigstens ein Indikatormedium zugeführt und mittels zumindest eines auf das Indikatormedium ansprechenden Leckagesensors (8, 8') das jeweils komplementäre Medium auf Indikatorspuren untersucht wird.

2. Verfahren nach Anspruch 1, **dadurch gekennzeichnet, dass** jedes Wärmetauschermodul (2a, 2b, 2c) mit einem oder mehreren separaten Prozesssensoren ausgerüstet wird.

3. Verfahren nach Anspruch 1 oder 2, **dadurch gekennzeichnet, dass** das jeweilige Wärmetauschermodul (2a, 2b, 2c) mit einer Probeentnahmerinne (7) mit Leckagesensor (8) zur Untersuchung von Kondensat des Reaktionsmediums und/oder Untersuchung des Wärmeträgermediums ausgerüstet ist.

4. Verfahren nach einem der Ansprüche 1 bis 3, **dadurch gekennzeichnet, dass** im Einlauf des Wärmetauschermediums für das Wärmetauschermodul (2a, 2b, 2c) ein Dosierventil (7) vorgesehen ist, um das Indikatormedium zuzuführen und/oder im Auslauf des Wärmetauschermediums für das Wärmetauschermodul (2a, 2b, 2c) eine Entnahmeöffnung (9) mit angeschlossenem Leckagesensor (8') vorgesehen ist.

5. Verfahren nach einem der Ansprüche 1 bis 4, **dadurch gekennzeichnet, dass** das Indikatormedium in einer vorgegebenen Menge dem Wärmeträgermedium und/oder dem Reaktionsmedium eingangsseitig des Wärmetauschermoduls (2a, 2b, 2c) zugeführt und jeweils ausgangsseitig die Menge an Indikatormedium im Wärmeträgermedium und/oder Reaktionsmedium gemessen wird.

6. Verfahren nach Anspruch 5, **dadurch gekennzeichnet, dass** aus einer etwaigen Differenz zwischen der eingangsseitigen Menge des Indikatormediums und dessen ausgangsseitiger Menge auf Leckagen im Kreislauf des Wärmeträgermediums und/oder Reaktionsmediums zurückgeschlossen wird.

7. Verfahren nach einem der Ansprüche 1 bis 6, **dadurch gekennzeichnet, dass** das jeweilige Wärmetauschermodul (2a, 2b, 2c) mit jeweils einem eigenen Leckagesensor (8, 8') ausgerüstet wird.

8. Verfahren nach einem der Ansprüche 1 bis 7, **dadurch gekennzeichnet, dass** wenigstens ein Leckagesensor (8, 8') für sämtliche Wärmetauschermodule (2a, 2b, 2c) vorgesehen ist, wobei das zu untersuchende Wärmeträgermedium und/oder Reaktionsmedium jedes einzelnen Wärmetauschermoduls (2a, 2b, 2c) dem Leckagesensor (8, 8') getrennt zugeführt wird, beispielsweise seriell.

9. Verfahren nach einem der Ansprüche 1 bis 8, **dadurch gekennzeichnet, dass** das Indikatormedium als inertes Medium ausgebildet ist, beispielsweise als Edelgas.

10. Verfahren nach einem der Ansprüche 1 bis 9, **dadurch gekennzeichnet, dass** eine Steueranlage (10) vorgesehen ist, um gegebenenfalls das wenigstens eine Dosierventil (7') zu beaufschlagen und den Leckagesensor (8, 8) auszulesen.

11. Verfahren nach einem der Ansprüche 1 bis 10, **dadurch gekennzeichnet, dass** der Behälter (1) mit einer verschließbaren und an das jeweilige Wärmetauschermodul (2a, 2b, 2c) angepassten Öffnung (11) ausgerüstet wird.

## Claims

1. A method for operating a device for converting in particular gaseous reaction media, comprising at least one heat exchanger (2) in a container (1), wherein a heat exchanger medium acts on the heat exchanger (2), and comprising a leakage unit (7, 8; 7', 8') for detecting potential leakages inside the container (2), wherein the heat exchanger (2) is composed of two or more heat exchanger modules (2a, 2b, 2c), which are each monitored individually or separate from each other by means of the leakage unit (7, 8; 7', 8'),
**characterized in that**
at least one indicator medium is fed to the reaction medium and/or the heat exchanger medium, and by means of at least one leakage sensor (8, 8') that is responsive to the indicator medium, the respective complementary medium is checked for traces of the indicator.

2. The method according to claim 1, **characterized in that** each heat exchanger module (2a, 2b, 2c) is equipped with one or more separate process sensors.

3. The method according to claim 1 or claim 2, **characterized in that** the respective heat exchanger module (2a, 2b, 2c) is equipped with a sampling channel (7) including a leakage sensor (8) for checking the condensate of the reaction medium and/or for checking the heat carrier medium.

4. The method according to any one of the claims 1 to 3, **characterized in that** a metering valve (7') for feeding the indicator medium is provided in the inlet of the heat exchanger medium for the heat exchanger module (2a, 2b, 2c), and/or a sampling opening (9) with a leakage sensor (8') connected thereto is provided in the outlet of the heat exchanger medium for the heat exchanger module (2a, 2b, 2c).

5. The method according to any one of the claims 1 to 4, **characterized in that** the indicator medium is fed in a predetermined amount on the inlet side of the heat exchanger module (2a, 2b, 2c) to the heat carrier medium and/or the reaction medium, and the amount of indicator medium in the heat carrier medium and/or reaction medium is measured in each case on the outlet side.

6. The method according to claim 5, **characterized in that** from a potential difference between the amount of the indicator medium on the inlet side and the amount of the indicator medium on the outlet side, leakages in the circuit of the heat carrier medium and/or reaction medium are concluded.

7. The method according to any one of the claims 1 to 6, **characterized in that** the respective heat exchanger module (2a, 2b, 2c) is in each case equipped with its own leakage sensor (8, 8').

8. The method according to any one of the claims 1 to 7, **characterized in that** at least one leakage sensor (8, 8') is provided for all heat exchanger modules (2a, 2b, 2c), wherein the heat exchanger medium and/or the reaction medium to be checked of each individual heat exchanger module (2a, 2b, 2c) is fed separately to the leakage sensor (8, 8'), for example, is fed serially.

9. The method according to any one of the claims 1 to 8, **characterized in that** the indicator medium is formed as an inert medium, for example as a noble gas.

10. The method according to any one of the claim1 1 to 9, **characterized in that** a control system (10) is provided so as to activate, if necessary, the at least one metering valve (7') and to read out the leakage sensor (8, 8').

11. The method according to any one of the claims 1 to 10, **characterized in that** the container (1) is equipped with a closable opening (11) that is adapted to the respective heat exchanger module (2a, 2b, 2c).

## Revendications

1. Procédé de fonctionnement d'un dispositif pour la transformation notamment de milieux de réaction gazeux, comportant au moins un échangeur thermique (2) dans un contenant (1), dans lequel l'échangeur thermique (2) est sollicité avec un milieu caloporteur, et comportant une unité de fuite (7,8; 7',8') pour détecter d'éventuels défauts d'étanchéité à l'intérieur du contenant (2), dans lequel l'échangeur thermique (2) est composé de deux ou plus modules d'échangeur thermique (2a,2b,2c), qui sont respectivement supervisés individuellement et séparément es uns des autres au moyen de l'unité de fuite (7,8; 7',8'),
**caractérisé en ce que**
au moins un milieu indicateur est introduit dans le milieu de réaction et/ou le milieu caloporteur et des traces d'indicateur sont examinées au moyen d'au moins un capteur de fuite (8,8') réagissant au milieu indicateur dans le milieu complémentaire respectif.

2. Procédé selon la revendication 1, **caractérisé en ce que** chaque module d'échangeur thermique (2a,2b,2c) est équipé d'un ou plusieurs capteurs de processus séparés.

3. Procédé selon la revendication 1 ou 2, **caractérisé en ce que** le module d'échangeur thermique respectif (2a,2b,2c) est équipé d'un conduit de prélèvement d'échantillon (7) avec capteur de fuite (8) pour examiner le condensat du milieu de réaction et/ou examiner le milieu caloporteur.

4. Procédé selon une des revendications 1 à 3, **caractérisé en ce que** sur le parcours d'amenée du milieu caloporteur une soupape de dosage (7') est prévue pour le module d'échangeur thermique (2a,2b,2c), afin d'alimenter le milieu indicateur et/ou sur le parcours d'évacuation du milieu caloporteur une ouverture de prélèvement (9) avec un capteur de fuite (8') raccordé est prévue pour le module d'échangeur thermique (2a,2b,2c).

5. Procédé selon une des revendications 1 à 4, **caractérisé en ce que** le milieu indicateur est alimenté dans une quantité prescrite dans le milieu caloporteur et/ou le milieu de réaction du côté d'entrée du module d'échangeur thermique (2a,2b,2c) et respectivement du côté de sortie la quantité du milieu indicateur dans le milieu caloporteur et/ou le milieu de réaction est mesurée.

6. Procédé selon la revendication 5, **caractérisé en ce que** d'après une éventuelle différence entre la quantité du côté d'entrée du milieu indicateur et sa quantité du côté de sortie, des fuites sont diagnostiquées dans le circuit du milieu caloporteur et/ou du milieu de réaction.

7. Procédé selon une des revendications 1 à 6, **caractérisé en ce que** le module d'échangeur thermique (2a,2b,2c) est respectivement équipé d'un capteur de fuite (8,8') propre.

8. Procédé selon une des revendications 1 à 7, **caractérisé en ce que** au moins un capteur de fuite (8,8') est prévu pour tous les modules d'échangeur thermique (2a,2b,2c), dans lequel le milieu caloporteur à contrôler et/ou le milieu de réaction de chaque module d'échangeur thermique individuel (2a,2b,2c) est introduit séparément dans le capteur de fuite (8,8'), par exemple en série.

9. Procédé selon une des revendications 1 à 8, **caractérisé en ce que** le milieu indicateur est conçu comme un milieu inerte, par exemple comme un gaz rare.

10. Procédé selon une des revendications 1 à 9, **caractérisé en ce que** une installation de commande (10) est prévue, pour solliciter le cas échéant au moins une soupape de dosage (7') et lire le capteur de fuite (8,8').

11. Procédé selon une des revendications 1 à 10, **caractérisé en ce que** le contenant (1) est équipé d'une ouverture (11) obturable, adaptée au module d'échangeur thermique (2a,2b,2c) respectif.
